# EUROPEAN PATENT SPECIFICATION

(11) **EP 2 796 340 B1**
(45) Date of publication and mention of the grant of the patent: **11.07.2018**
(21) Application number: 12852597.9
(22) Date of filing: 29.11.2012
(51) Int. Cl.: B62D 1/12, B60G 7/00, B60G 9/00, B60G 11/46, B60G 17/005, B60G 11/27

(54) **QUICK-CONNECTION LIFTER DEVICE**
HUBVORRICHTUNG MIT SCHNELLVERBINDUNG
DISPOSITIF ÉLÉVATEUR À LIAISON RAPIDE

(30) Priority: 30.11.2011 ES 201131945
(43) Date of publication of application: 29.10.2014
(73) Proprietor: Accesorios y Elevadores Valencia, S.L., 46530 Puzol (Valencia) (ES)
(72) Inventor: MORENO IBAÑEZ, Alberto, 46530 Puzol (Valencia) (ES)
(74) Representative: Isern Patentes y Marcas S.L.
(86) International application number: PCT/ES2012/070837
(87) International publication number: WO 2013/079756

(56) References cited:
- EP-A1- 0 352 541
- EP-A1- 0 670 258
- EP-A1- 0 941 915
- EP-A2- 1 902 933
- US-A- 4 293 145
- US-A1- 2006 249 922
- US-A1- 2007 145 705
- US-A1- 2008 150 272

## Description

### OBJECT OF THE INVENTION

The object of the present invention is a lifter device that can be connected to the suspension bracket of a vehicle without needing to remove any elements from the suspension of the vehicle, in an inexpensive manner and with great ease of assembly, simplicity, speed and reliability.

### BACKGROUND OF THE INVENTION

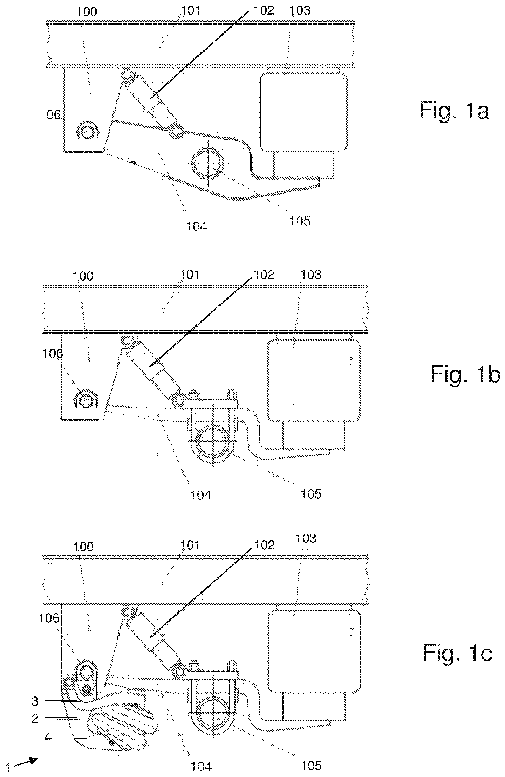

Currently, vehicles such as articulated trailers and semi-trailers have a pneumatic suspension mechanism which can respond to two known configurations such as those shown in Figs 1a and 1b.

Figure 1a shows the first configuration, which shows how the vehicle chassis (101) is supported on the suspension air spring (103) and the suspension bracket (100). In turn, a rigid suspension arm (104) has an end coupled to a suspension bolt (106) such that it can pivot therearound with the opposite end resting on the aforementioned suspension air spring (103) . The vehicle axle (105) is located on the suspension arm (104). This configuration further comprises a shock absorber (102) installed between the suspension arm (104) and the base of the suspension bracket (100).

Figure 1b shows the second known configuration, which is similar to the first except for the fact that the suspension arm (104), in this case, is much thinner than the former, thereby exerting a leaf-spring suspension.

On occasion, a lifter device (1) needs to be installed that is capable of lifting the wheel axle (105), for instance to adjust the number of wheels in contact with the road depending on the load, which means less wear on the wheels and savings on fuel. Its use is also required when greater manoeuvrability of the trailer is required in tight spaces. An important requirement to be fulfilled by the lifter device (1) is its ease of assembly and ability to adapt to the original structure of the suspension without needing to handle any elements thereof and doing the aforementioned as quickly as possible. Furthermore, the connection between two elements must be completely rigid. It is important that the lifter device (1) does not detach from the suspension, both in respect of the stresses exerted when the lifter device is in operation and in respect of any external impact thereon, since this could cause significant damage on collision with other vehicles.

Figure 1c shows an example wherein the lifter device (1) marketed by the authors of the present application since 2008 has been installed on the suspension of Figure 1b. The lifter device (1) is mainly formed by a bottom lifter bracket (2), a top lifter bracket (3) and an air spring (4). The bottom lifter bracket (2) has one end coupled to the head (106) of the suspension bolt and supported at the bottom of the suspension bracket (100), while the opposite end is connected to the pneumatic air spring (4). The air spring (4) is, in turn, coupled to the underside of the suspension arm (104). Hence, if it were necessary to raise the vehicle axle (105), it would suffice to inject pressurised air into the air spring (4), which, in turn, moves the suspension arm (104) upwards, resulting in the axle (105) being lifted.

However, the lifter device (1) cannot always be connected to the suspension bolt (either through the head, the nut or bushings of the bolt bracket), as some configurations make this connection too complex. Accordingly, there is a need for a lifter device designed for attachment to the suspension of the trailer in an alternative way.

EP0670258A1 discloses a lifting device for axles of heavy vehicles, wherein a lifting means is provided for lifting the axle by directly pulling the axle. The device is coupled by an end to the axle and by the other end for instance to a cantilever which is fastened to a cross-member in the region of the vehicle-frame brackets supporting the longitudinal links, or via a support piece directly on a cross-member in the region of longitudinal members of the vehicle, or the vehicle frame via a support piece in the region of the vehicle floor.

EP0941915A1 discloses another lifting device for axles of heavy vehicles, wherein the lifting means is positioned under the bearing arm and anchored from the carrying bracket. The lifting means pushing upwardly the bearing arm in order to lift the axle.

EP1902933A2 discloses another lifting device for axles of heavy vehicles, wherein lifting means pushes upwardly the bearing arm in order to lift the axle. The support of the lifting means being fastened to a fixing bolt protruding from the carrying bracket.

### DESCRIPTION OF THE INVENTION

The invention herein describes a lifter device configured for anchoring to the front plate of the suspension bracket of the trailer. Indeed, as a result of its particular manufacturing process, the front plate (in this context, the face closest to the engine element) of the suspension bracket of the majority of manufacturers has several openings. The new lifter device of the invention is specifically designed to take advantage of the presence of such openings, thereby avoiding the need for coupling to the suspension bolt. The lifter device enables quick connection to the suspension bracket of a vehicle.

The lifter device of the invention essentially comprises a lifter bracket that has a bottom end that can be connected to an air spring, and a top end comprising:
a) At least one external supporting element capable of resting on the outer surface of a front plate of the suspension bracket.
   In this document, the terms "vertical" and "horizontal" are to be interpreted taking the natural position of the parts when connected to a vehicle as a reference. Therefore, the external supporting element will be essentially flat, substantially vertical in direction and complementary to the outer surface of the front plate (also vertical) of the suspension bracket.
b) At least one opening for the installation, in combination with a corresponding opening of the front plate of the suspension bracket, of an anchoring element. This opening can be located in the supporting element itself, or in any other area of the top end of the lifter bracket.
   The number of openings may vary depending on the case, having a minimum of one. By saying that the openings serve "for the installation, in combination with a corresponding opening in the front plate of the suspension bracket of an anchoring element", it is intended to refer to the positions of the openings in one and another part that must be properly aligned to allow the anchoring elements to pass through, which can be screws, bolts or the like.
c) At least one internal supporting element which is capable of being inserted in a hollow inner area of the suspension bracket and of resting on the inner surface of said front plate.

Therefore, the screws or bolts joining the top end of the lifter bracket to the front plate of the suspension bracket mainly bear the vertical stresses, while the horizontal loads and torques are borne by the internal supporting element, which rests on the inner surface of the front plate of the suspension bracket, and by the external supporting element, which rests on the outer surface of the front plate of the suspension bracket. The lifter device is thereby coupled to the suspension bracket in a quick and safe manner.

The device of the invention can optionally incorporate a regulating supporting element suitable for resting on the bottom area of the outer surface of the front plate of the suspension bracket. The regulating supporting element will, therefore, be essentially flat and parallel to said internal supporting element, being placed at a distance approximately equal to the thickness of the front plate of the suspension bracket. The function of this supporting element is to prevent the movement of the lifter bracket when not in an operating position, and therefore, receives the stresses arising from the gaps present in the assembly, which could even cause its uncoupling from the suspension bracket.

Starting with the above basic characteristics, there are essentially three different ways of configuring the lifter device in respect of how it is connected to the suspension bracket.

Firstly, in a preferred embodiment, the internal supporting element is a projection of the lifter bracket itself, namely, an extension which forms an integral part of said lifter bracket. This is the most basic form of the lifter device of the invention, and the installation method would be as follows. Firstly, the lifter device is lifted vertically from the bottom until the internal supporting element is inserted into the hollow area of the suspension bracket, resting on the inner surface of the front plate. In that position, the openings on the top end of the lifter bracket coincide with the openings on the front plate of the suspension bracket. Then, it only needs to be secured using bolts or screws.

In an alternative embodiment, the internal supporting element has an opening situated opposite the opening in the top end of the lifter bracket. In this way, the screw or bolt is secured to the lifter bracket on both sides of the front plate of the suspension bracket, resulting in a more secure fastening.

Nonetheless, this form of installation from below may present practical difficulties in some cases where there is not enough space to manoeuver. For this reason, alternative configurations have been designed wherein a removable flange is used as an internal supporting element. Therefore, the lifter device can be placed by moving it horizontally instead of vertically.

Accordingly, in a second configuration, the internal supporting element is formed by a vertical projection of a removable horizontal flange, said removable flange comprising an opening with a vertical axis for anchoring to the lifter bracket. The connection method in this case would be to move the lifter device of the invention horizontally until the external supporting element is positioned on the outer surface of the front plate of the suspension bracket. Then, the removable horizontal flange is placed such that the projection rests on the inner surface of the bottom end of the front plate of the suspension bracket. Screws or bolts are then used to connect the flange to the lifter bracket and the top end of the lifter bracket to the front plate.

In a third configuration, similar to the second, the internal supporting element is formed by a projection of a vertical flange, said flange comprising an opening with a horizontal axis for anchoring the lifter bracket. In this case the installation is similar to the above.

On the other hand, there are different variations of suspension models on the market that define different end positions of the suspension arms. In order for the lifter bracket to be compatible with these known suspension systems, an alternative lifter bracket is defined, which is detachable in two parts, a top end and a bottom end, both being connectable with each other in different ways corresponding to different effective lengths of the lifter bracket.

For example, the bottom end and the top end may each comprise several openings, for example arranged in straight or curved rows to be attached by means anchoring elements, such as bolts or screws. Therefore, in order to install the lifter device, the top end would be connected to the suspension bracket as described above. Once this has been done, the bottom end would be connected to the top end by means of the said openings, based on the need for the suspension arm to move in each case. It would also be possible to first connect the bottom end to the top end, and then connect the latter to the front plate of the suspension bracket. This method will be clearer from the example of the invention which will be described below in this document.

Where necessary, the bottom end of the lifter bracket shall further comprise an anchoring base for connecting a guide bracket.

In all cases, the lifter bracket preferably further comprises a reinforced, wider area in the area corresponding to each anchoring opening.

### BRIEF DESCRIPTION OF THE FIGURES

Figures 1a, 1b and 1c show both known embodiments of suspensions and lifting devices.
Figure 2 shows an example of an embodiment of the lifter device according to the present invention which is provided with a regulating supporting element.
Figures 3a- 3c schematically show various steps for connecting a lifter device similar to that in Figure 2.
Figure 4 shows another embodiment of the lifter device according to the present invention wherein the internal supporting element has an opening situated opposite the opening of the external supporting element.
Figures 5a-5c show various steps of the method for assembling the device in Figure 4.
Figure 6 shows yet another embodiment of the lifter device according to the present invention wherein the internal supporting element is formed by a horizontal flange.
Figure 7 shows another embodiment of the lifter device according to the present invention wherein the internal supporting element is formed by a vertical flange.
Figures 8a and 8b show two different positions of another embodiment of the lifter device according to the present invention wherein the lifter bracket can be detached in two parts.
Figures 9a and 9b show another embodiment of a lifter device wherein the lifter bracket can be detached in two parts, and further has an anchor for a guide bracket.

### PREFERRED EMBODIMENT OF THE INVENTION

Described below is a particular embodiment of the invention with reference to the accompanying figures. In these figures, identical reference numbers were used to denote equivalent parts of the various embodiments.

As described above, Figures 1a and 1b respectively correspond to two known configurations for vehicle suspension systems, while Figure 1c shows a lifter device according to the prior art.

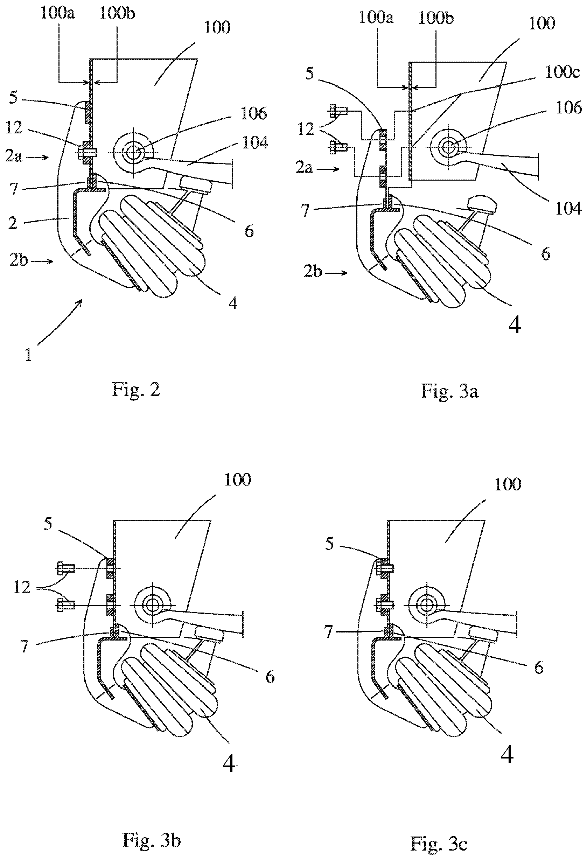

Figure 2 shows an example corresponding to the first configuration of the invention, being the simplest configuration. The figure represents only the bottom portion of the suspension bracket (100) of a vehicle and the lifter device (1) formed by a lifter bracket (2) and a suspension air spring (4). Some suspension elements have also been shown in the figure, such as the suspension arm (104) or the suspension bolt (106). The lifter bracket (2) has a top portion (2a) connected to the suspension bracket (100) by means of an anchor bolt (12) and a bottom portion (2b) connected to an air spring (4). The front plate of the suspension bracket (100) has an outer surface (100a) and an inner surface (100b). It can be seen how the external supporting element (5), in this example with a flat, vertical shape, is resting on the outer surface (100a) of the suspension bracket (100), leaving the front plate of the suspension bracket (100) wedged between said external supporting support (5), the internal supporting element (6), in this configuration embodiment having a flat, vertical configuration, and the regulating supporting element (7).

Figure 2 shows the assembly of an example of an embodiment wherein the top portion (2a) of the lifter bracket (2) has a single opening (5a) which is located in a suitable place in order to coincide with an opening (100c) corresponding to the front plate the suspension bracket (100), the connection between both parts being made by means of an anchoring screw (12).

Figures 3a- 3c show, in greater detail, how to connect a lifter device (2) similar to the one in Figure 2, although with two openings (5a), as an example of a suspension bracket (100). In addition, in this case one of the openings (5a) is located in the actual external supporting element (5). As previously described herein, the lifter bracket (2) moves vertically from the bottom (Fig. 3a) until the bottom end of the front plate of the suspension bracket (100) is positioned between the internal supporting element (6) and the regulating supporting element (7) (Fig. 3b). Once in this position, two screws (12) are used for the connection (Fig. 3c).

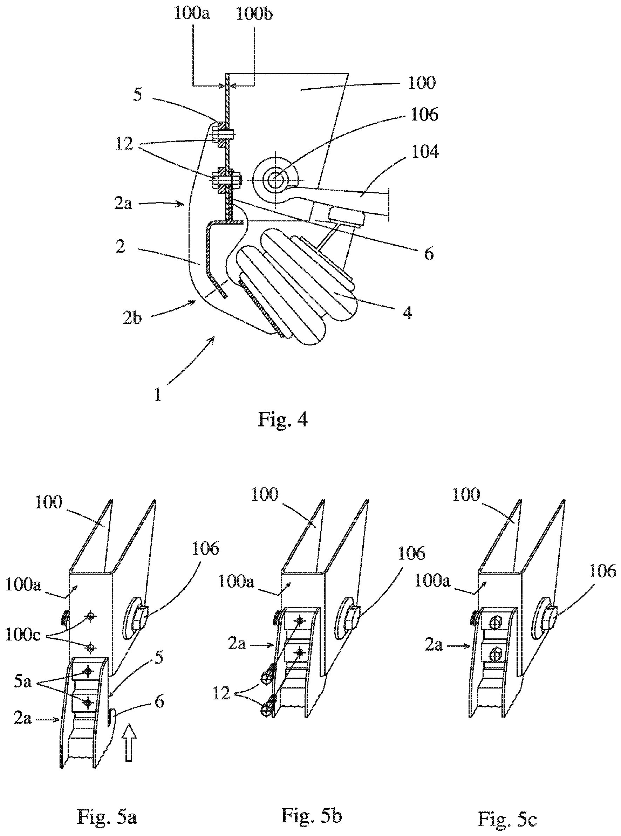

Figure 4 shows another example of the invention which substantially coincides with that of Figure 2, except that, in this case, the internal supporting element (6) has a flat, vertical configuration which extends inwardly, reaching the height at which one of the anchoring elements is located between the lifter bracket (2) and the suspension bracket (100). In addition, it can also be seen that, in this case, the top portion (2a) of the lifter bracket (2) has two openings (5a) that coincide with two openings (100c) corresponding to the front plate of the suspension bracket (100), therefore, two screws (12) are used instead of one for the connection. One of the openings (5a) is located in the actual external supporting element (5) .

Figures 5a- 5c show a perspective view of the steps required to connect the lifter device (1) in Figure 4 and a suspension bracket (100). It can further be seen how the suspension bracket (100) is essentially formed by a sheet folded into a U shape which discloses a hollow area on the inside. Firstly, as shown by the arrow in Figure 5a, the lifter bracket (2) moves vertically from the bottom to the top, with its external supporting element (5) resting on the outer surface (100a) of the front plate of the suspension bracket (100), until the internal supporting element (6) is inserted into the hollow area of the suspension bracket (100) (Figure 5b). Then, the connection screws (12) simply have to be fitted (Fig. 5c).

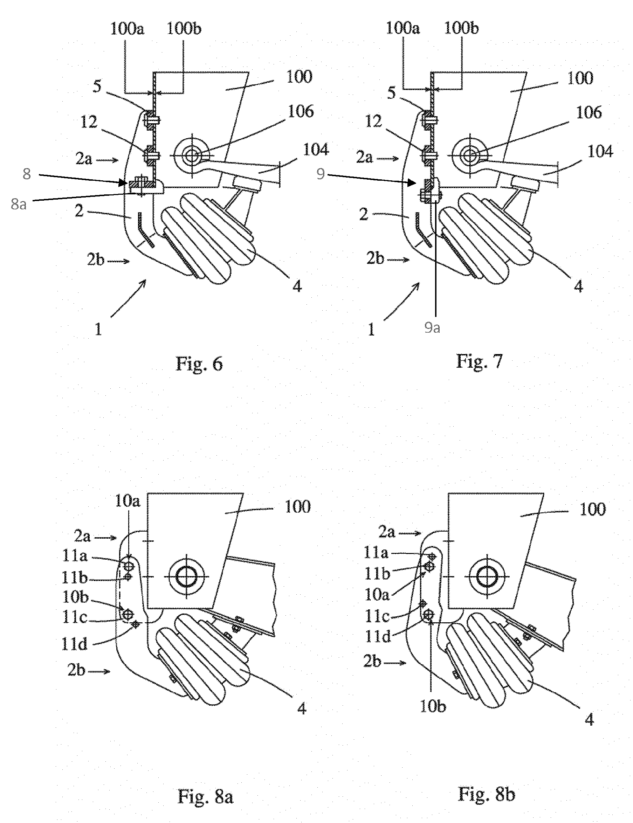

Figure 6 shows another example corresponding to the second configuration of the invention wherein the internal supporting element (6) is formed by a removable horizontal flange (8). It can be seen how the flange (8) has an inner projection (8a) which performs the function of the internal supporting element (6) from the previous embodiments. The advantage of this embodiment is that the installation is carried out by moving the lifter bracket (2) horizontally, in this example from left to right, until the bolts (12), which in this example are part of the lifter bracket (2) itself, are inserted into the openings (100c) of the front plate of the suspension bracket (100). Once this has been done, the removable flange (8) with its inner projection (8a) resting on the inner surface (100b) of the front plate of the suspension bracket (100) is installed, and said flange (8) is connected to said lifter bracket (2) by means of a screw, through a structural anchoring element. This element which serves as an anchoring base for the flange (8) will additionally function as the regulating supporting element (7) described in the previous cases. In this configuration, therefore, the anchoring elements or bolts (12) are no longer removable, unlike the previous cases in which screws were used.

Figure 7 shows another example relating to the third configuration of the invention wherein the internal supporting element (6) is formed by a removable vertical flange (9). The concept is similar to that shown in Figure 6, essentially changing the direction of the connection opening of the flange (9) with the lifter bracket (2). Specifically, the flange (9) has a projection (9a) which is equivalent to the internal supporting element (6) of the above embodiments and is connected to the anchoring bracket (2) by means of a screw, through a structural anchoring element. This element which serves as an anchoring base for the flange (9) will additionally function as the regulating supporting element (7) described in the previous cases. The connection is made in the same way as that described with reference to Figure 6, in this case also using bolts (12) .

Figures 8a and 8b show a lifter device (1) wherein the top end (2a) and the bottom end (2b) of the lifter bracket (2) are removable. More specifically, the top end (2a) is configured according to any of the four embodiments described such as to enable connection to the suspension bracket (100). Furthermore, although it may have a plurality of additional openings, in this particular embodiment it has two additional openings (10a, 10b). Meanwhile, the bottom end (2b) has, in this example, four additional openings (11a, 11b, 11c, 11d) located two by two vertically, although just like the top end (2a) it can have any number or distribution of openings relative to each other.

In this embodiment, the location of the openings (10, 11) is such that two connection methods are possible between the top end (2a) and the bottom end (2b). In Figure 8a shows a first connection method wherein two screws are used to connect the top openings (11a, 11c) of the bottom end (2b) to the openings (10a, 10b) of the top end (2a). In Figure 8b, on the other hand, the bottom openings (11b, 11d) of the bottom end have been used for connection with the openings (10a, 10b) of the top end (2a). It can be seen how the effective rotation angle of the lifter bracket (2) in the first case is greater than in the second case. In this way, the height of the lifter bracket (2) can be adjusted depending on the several variants of vehicle suspension models.

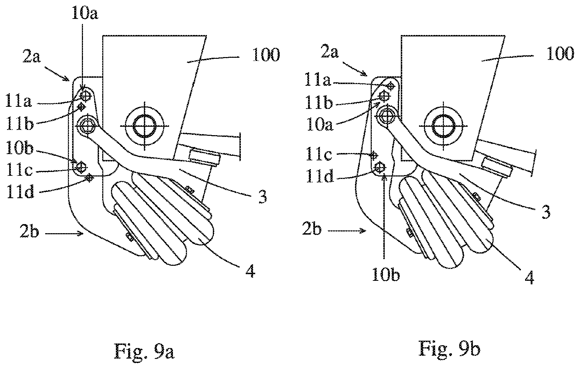

Finally, figures 9a and 9b show two positions of an embodiment equivalent to that of Figures 8a and 8b, although in this case, the guide bracket (3) which attaches to the lifter bracket (2) by means of an anchoring base that is located at the bottom end (2b) of the lifter bracket (2) is included. It would also be possible that the anchoring base for connecting the guide bracket (3) were located at the top end (2a) of the lifter bracket (2).

In Figures 8-9, the two largest circles of the set of four openings represent the screw or bolt used for connection, and, therefore, indicate the position of the openings (10a,10b) of the top end (2a), which are hidden. The two smaller circles represent the openings in the bottom end (2b) not used in each specific configuration. To represent this, the hidden openings (10a, 10b) are indicated by means of broken lines.

In the described preferred embodiments, the supporting elements (external (5), internal (6) and regulating (7)) are fixed to the lifter bracket structure (2), and therefore, the anchoring elements (12) are removable, in order to install the lifter bracket (2). However, there is another embodiment wherein this is reversed and the coupling elements are fixed to the structure of the lifter bracket and the internal supporting element is removable.

## Claims

1. A lifter device (1) with quick connection to a suspension bracket (100) of a vehicle, which includes a lifter bracket (2), the bottom end of which (2b) can be connected to an air spring (4), **characterised in that** the top end (2a) of the lifter bracket (2) includes:
- At least one external supporting element (5) capable of resting on an outer surface (100a) of a front plate of the suspension bracket (100),
- At least one opening (5a) for the installation, in combination with a corresponding opening (100b) of the front plate of the suspension bracket (100), of an anchoring element (12), the anchoring element (12) to be passed through the opening of the top end (2a) of the lifter bracket (2) and the opening of the front plate of the suspension bracket (100); and
- At least one internal supporting element (6) which is capable of being inserted in a hollow inner area of the suspension bracket (100) and of resting on the vertical inner surface of said front plate.

2. A lifter device (1) according to claim 1 wherein the opening (5a) is arranged in the external supporting element (5).

3. A lifter device (1) according to any of the preceding claims, further comprising a regulating supporting element (7) suitable for resting on the bottom of the vertical outer surface (100a) of the front plate of the suspension bracket (100).

4. A lifter device (1) according to any preceding claims wherein the internal supporting element (6) is a projection of the lifter bracket (2) itself.

5. A lifter device (1) according to claim 4 wherein the internal supporting element (6) has an opening located opposite the opening (5a) of the external supporting element (5).

6. A lifter device (1) according to claim 1 wherein the internal supporting element (6) is formed by a vertical projection (8a) of a removable horizontal flange (8), said flange (8) comprising an opening with a vertical axis for anchoring to the lifter bracket (2).

7. A lifter device (1) according to claim 1 wherein the internal supporting element (6) is formed by a projection (9a) of a vertical flange (9), said flange (9) comprising an opening with a horizontal axis for anchoring the lifter bracket (2).

8. A lifter device (1) according to any of the preceding claims, wherein the top end (2a) and the bottom end (2b) of the lifter bracket (2) are removable, being able to connect in different ways corresponding to different effective lengths of the lifter bracket (2) .

9. A lifter device (1) according to claim 8 wherein the top end (2a) and the bottom end (2b) each comprise a plurality of additional openings (10,11) for coupling, by means of anchoring elements, in various positions.

10. A lifter device (1) according to any of the preceding claims, wherein the bottom end (2a) of the lifter bracket (2) further comprises an anchoring base for connecting a guide bracket (3).

11. A lifter device (1) according to any of the claims 1-9, wherein the top end (2a) of the lifter bracket (2)further comprises an anchoring base for connecting a guide bracket (3).

12. A lifter device (1) according to any of the preceding claims, which further comprises a wider area in the area corresponding to each anchoring opening.

13. A lifter device (1) according to any of the preceding claims, wherein the anchoring elements (12) are screws or bolts.

## Patentansprüche

1. Hubvorrichtung (1) mit Schnellverbindung an eine Aufhängebefestigung (100) eines Fahrzeugs, die eine Hubbefestigung (2) einschließt, von der das untere Ende (2b) mit einer Luftfeder (4) verbunden werden kann, **dadurch gekennzeichnet, dass** das obere Ende (2a) der Hubbefestigung (2) Folgendes einschließt:
- mindestens ein externes Stützelement (5), das auf einer Außenfläche (100a) einer Frontscheibe der Aufhängebefestigung (100) aufliegen kann,
- mindestens eine Öffnung (5a) für die Installation - in Kombination mit einer entsprechenden Öffnung (100b) der Frontscheibe der Aufhängebefestigung (100) - eines Verankerungselements (12), wobei das Verankerungselement (12) durch die Öffnung des oberen Endes (2a) der Hubbefestigung (2) und durch die Öffnung der Frontscheibe der Aufhängebefestigung (100) geführt werden soll; und
- mindestens ein internes Stützelement (6), das in einen inneren Hohlraum der Aufhängebefestigung (100) eingeführt werden kann und auf der vertikalen Innenfläche der Frontscheibe aufliegen kann.

2. Hubvorrichtung (1) nach Anspruch 1, wobei die Öffnung (5a) in dem externen Stützelement (5) angeordnet ist.

3. Hubvorrichtung (1) nach einem der vorhergehenden Ansprüche, ferner umfassend ein regulierendes Stützelement (7), das für das Aufliegen auf der Unterseite der vertikalen Außenfläche (100a) der Frontscheibe der Aufhängebefestigung (100) geeignet ist.

4. Hubvorrichtung (1) nach einem der vorhergehenden Ansprüche, wobei das interne Stützelement (6) ein Vorsprung der Hubbefestigung (2) an sich ist.

5. Hubvorrichtung (1) nach Anspruch 4, wobei das interne Stützelement (6) eine Öffnung hat, die sich gegenüber von der Öffnung (5a) des externen Stützelements (5) befindet.

6. Hubvorrichtung (1) nach Anspruch 1, wobei das interne Stützelement (6) durch einen vertikalen Vorsprung (8a) eines abnehmbaren horizontalen Flansches (8) gebildet ist, wobei der Flansch (8) eine Öffnung mit einer vertikalen Achse zum Verankern mit der Hubbefestigung (2) umfasst.

7. Hubvorrichtung (1) nach Anspruch 1, wobei das interne Stützelement (6) durch einen Vorsprung (9a) eines vertikalen Flansches (9) gebildet ist, wobei der Flansch (9) eine Öffnung mit einer horizontalen Achse zum Verankern der Hubbefestigung (2) umfasst.

8. Hubvorrichtung (1) nach einem der vorhergehenden Ansprüche, wobei das obere Ende (2a) und das untere Ende (2b) der Hubbefestigung (2) abnehmbar sind, und auf verschiedene Arten entsprechend verschiedener effektiver Längen der Hubbefestigung (2) verbunden werden können.

9. Hubvorrichtung (1) nach Anspruch 8, wobei das obere Ende (2a) und das untere Ende (2b) jeweils mehrere zusätzliche Öffnungen (10, 11) zur Kupplung mittels Verankerungselemente in verschiedenen Positionen umfassen.

10. Hubvorrichtung (1) nach einem der vorhergehenden Ansprüche, wobei das untere Ende (2a) der Hubbefestigung (2) ferner eine Verankerungsbasis zum Verbinden einer Führungsbefestigung (3) umfasst.

11. Hubvorrichtung (1) nach einem der Ansprüche 1 bis 9, wobei das obere Ende (2a) der Hubbefestigung (2) ferner eine Verankerungsbasis zum Verbinden einer Führungsbefestigung (3) umfasst.

12. Hubvorrichtung (1) nach einem der vorhergehenden Ansprüche, die ferner einen breiteren Bereich in dem Bereich entsprechend jeder Verankerungsöffnung umfasst.

13. Hubvorrichtung (1) nach einem der vorhergehenden Ansprüche, wobei die Verankerungselemente (12) Schrauben oder Bolzen sind.

## Revendications

1. Dispositif de levage (1) pour un raccordement rapide à un support de suspension (100) d'un véhicule, qui comporte un support de levage (2), dont l'extrémité inférieure (2b) peut être raccordée à un ressort pneumatique (4), **caractérisé en ce que** l'extrémité supérieure (2a) du support de levage (2) comporte :
- Au moins un élément de support externe (5) capable de s'appuyer sur une surface externe (100a) d'une plaque avant du support de suspension (100),
- Au moins une ouverture (5a) pour l'installation, en combinaison avec une ouverture correspondante (100b) de la plaque avant du support de suspension (100), d'un élément d'ancrage (12), l'élément d'ancrage (12) à passer par l'ouverture de l'extrémité supérieure (2a) du support de levage (2) et l'ouverture de la plaque avant du support de suspension (100) ; et
- Au moins un élément de support interne (6) qui est capable d'être inséré dans une zone interne creuse du support de suspension (100) et de s'appuyer sur la surface interne verticale de ladite plaque avant.

2. Dispositif de levage (1) selon la revendication 1 dans lequel l'ouverture (5a) est disposée dans l'élément de support externe (5).

3. Dispositif de levage (1) selon l'une quelconque des revendications précédentes, comprenant en outre un élément de support de réglage (7) apte à s'appuyer sur la partie inférieure de la surface externe verticale (100a) de la plaque avant du support de suspension (100).

4. Dispositif de levage (1) selon l'une quelconque des revendications précédentes dans lequel l'élément de support interne (6) est une projection du propre support de levage (2).

5. Dispositif de levage (1) selon la revendication 4 dans lequel l'élément de support interne (6) a une ouverture située en regard de l'ouverture (5a) de l'élément de support externe (5).

6. Dispositif de levage (1) selon la revendication 1 dans lequel l'élément de support interne (6) est constitué d'une projection verticale (8a) d'une bride horizontale amovible (8), ladite bride (8) comprenant une ouverture avec un axe vertical pour ancrer le support de levage (2).

7. Dispositif de levage (1) selon la revendication 1 dans lequel l'élément de support interne (6) est constitué d'une projection (9a) d'une bride verticale (9), ladite bride (9) comprenant une ouverture avec un axe horizontal pour ancrer le support de levage (2).

8. Dispositif de levage (1) selon l'une quelconque des revendications précédentes, dans lequel l'extrémité supérieure (2a) et l'extrémité inférieure (2b) du support de levage (2) sont amovibles, étant capables d'être raccordées de différentes façons correspondant aux différentes longueurs effectives du support de levage (2).

9. Dispositif de levage (1) selon la revendication 8 dans lequel l'extrémité supérieure (2a) et l'extrémité inférieure (2b) comprennent chacune une pluralité d'ouvertures supplémentaires (10, 11) pour le couplage, au moyen d'éléments d'ancrage, dans diverses positions.

10. Dispositif de levage (1) selon l'une quelconque des revendications précédentes, dans lequel l'extrémité inférieure (2a) du support de levage (2) comprend en outre une base d'ancrage pour raccorder un support de guidage (3).

11. Dispositif de levage (1) selon l'une quelconque des revendications 1-9, dans lequel l'extrémité supérieure (2a) du support de levage (2) comprend en outre une base d'ancrage pour raccorder un support de guidage (3).

12. Dispositif de levage (1) selon l'une quelconque des revendications précédentes, qui comprend en outre une zone plus large dans la zone correspondant à chaque ouverture d'ancrage.

13. Dispositif de levage (1) selon l'une quelconque des revendications précédentes, dans lequel les éléments d'ancrage (12) sont des vis ou boulons.
